# EUROPÄISCHE PATENTSCHRIFT

(11) **EP 2 649 340 B1**
(45) Veröffentlichungstag und Bekanntmachung des Hinweises auf die Patenterteilung: **07.01.2015**
(21) Anmeldenummer: 11782565.3
(22) Anmeldetag: 15.11.2011
(51) Int. Cl.: F16D 55/02, F16D 65/00

(54) **KENNZEICHNUNGSTRÄGER ZUM KENNZEICHNEN EINER SCHWIMMSATTELBREMSE**
MARKING CARRIER FOR MARKING A FLOATING CALIPER BRAKE
SUPPORT D'IDENTIFICATION POUR IDENTIFIER UN FREIN À ÉTRIER FLOTTANT

(30) Priorität: 09.12.2010 DE 102010053910
(43) Veröffentlichungstag der Anmeldung: 16.10.2013
(73) Patentinhaber: Lucas Automotive GmbH, 56070 Koblenz (DE)
(72) Erfinder: MALLMANN, Markus, 56291 Pfalzfeld (DE); HEINEMANN, Maria, 53489 Sinzig (DE); KREBS, Stefan, 56077 Koblenz (DE); STAHL, Peter, 53474 Bad Neuenahr-Ahrweiler (DE)
(74) Vertreter: Thum, Bernhard
(86) Internationale Anmeldenummer: PCT/EP2011/005751
(87) Internationale Veröffentlichungsnummer: WO 2012/076112

(56) Entgegenhaltungen:
- DE-A1-102004 043 307
- DE-A1-102006 020 282
- DE-A1-102007 001 731
- DE-A1-102007 033 165

## Beschreibung

Die vorliegende Erfindung betrifft einen Kennzeichnungsträger zum Kennzeichnen einer Fahrzeugkomponente, insbesondere einer Komponente einer Schwimmsattelbremse.

Der erfindungsgemäße Kennzeichnungsträger kann insbesondere an einer Bremszange einer Schwimmsattelbremse für ein Kraftfahrzeug angebracht werden, um etwa den Bremsentyp, den Bremsenhersteller oder den Fahrzeughersteller anzugeben. Derartige Kennzeichnungsträger werden verwendet, um die einzelne Fahrzeugkomponente, insbesondere die Bremszange, optisch aufzuwerten, weil diese von außen durch die Felgen des Fahrzeugs häufig sichtbar ist. Im Einzelnen umfasst der erfindungsgemäße Kennzeichnungsträger einen flächigen Grundkörper, an dem eine Kennzeichnung angebracht oder anbringbar ist, und Befestigungsmittel zum lösbaren Befestigen des Kennzeichnungsträgers an der Fahrzeugkomponente, wobei die Befestigungsmittel integral mit dem Kennzeichnungsträger ausgebildet und unter Vermeidung von Hilfsmitteln an der Fahrzeugkomponente bleibend festklemmbar sind.

Ein derartiger Kennzeichnungsträger ist beispielsweise aus dem Dokument DE 41 01 514 C2 bekannt. Bei diesem Stand der Technik wird der Kennzeichnungsträger durch geeignete Rast- oder Klemmmittel unmittelbar an Vorsprüngen, Federn oder in Ausnehmungen festgeklemmt, die an den Bremsbelägen oder sonstigen Komponenten der Bremse vorgesehen sind. Insbesondere das Festklemmen an den Bremsbelägen hat jedoch den Nachteil, dass diese bei jeder Bremsenbetätigung bewegt werden und zum Teil starken Vibrationen unterliegen können, was sich negativ auf eine dauerhafte Befestigung der Kennzeichnungsträger auswirken kann. Es hat sich gezeigt, dass die in diesem Dokument gezeigten Rast- oder Klemmmittel anfällig für einen Verlust des jeweiligen Kennzeichnungsträgers sind.

Ferner zeigt das Dokument DE 100 27 783 A1 einen Bremssattel einer Scheibenbremse, an dem ein Kennzeichnungsträger mittels zusätzlicher Kerbnägel befestigt ist. Wenngleich dieser Stand der Technik eine zuverlässige und dauerhafte Befestigung des Kennzeichnungsträgers ermöglicht, ist die Montage der zusätzlichen Kerbnägel aufwändig und kostenintensiv. Darüber hinaus erfordert eine wartungsbedingte Entfernung des Kennzeichnungsträgers ein destruktives Entfernen der Kerbnägel, was als Nachteil angesehen wird.

Das Dokument EP 1 146 245 A2 beschreibt eine Abdeckung zur Kennzeichnung einzelner Komponenten eines Bremssystems. Diese Abdeckung wird zum einen über geeignete Mittel mit der jeweiligen Fahrzeugkomponente verklemmt. Zusätzlich ist vorgesehen, die Abdeckung auch noch mittels geeigneter Bolzen zu verschrauben. Auch bei diesem System ist die Montage sowie ein wartungsbedingtes Abnehmen des Kennzeichnungsträgers aufwändig.

Es ist Aufgabe der vorliegenden Erfindung, einen Kennzeichnungsträger der eingangs bezeichneten Art bereitzustellen, der einfach an der Fahrzeugkomponente montierbar ist, im Betrieb dauerhaft auch unter äußeren mechanischen Einflüssen an der Fahrzeugkomponente verbleibt und unter geringem Aufwand von der Fahrzeugkomponente abgenommen werden kann.

Diese Aufgabe wird durch eine Kennzeichnungsträger gelöst, der wenigstens eine von seinem Grundkörper ausgehende Federzunge aufweist, welche dazu ausgebildet ist, federnd an der Fahrzeugkomponente anzugreifen und den Grundkörper in einer Vorspannrichtung gegen die Fahrzeugkomponente vorzuspannen, wobei der Kennzeichnungsträger wenigstens eine Federlasche aufweist, die an der Fahrzeugkomponente derart angreift, dass sie den Kennzeichnungsträger in einer zur Vorspannrichtung entgegengesetzten Halterichtung hält.

Erfindungsgemäß ist vorgesehen, dass der Kennzeichnungsträger durch die wenigstens eine Federzunge und die in entgegengesetzter Richtung wirkende wenigstens eine Federlasche sicher an der Fahrzeugkomponente, insbesondere der Bremszange, gehalten wird. Dies erfolgt allein durch die Wechselwirkung der wenigstens einen Federzunge und der wenigstens einen Federlasche mit der Fahrzeugkomponente ohne zusätzliche Hilfsmittel, wie beispielsweise Schrauben, Kerbnägel, Niete oder dergleichen. Die dauerhafte Anbindung an die Fahrzeugkomponente wird durch die Federkräfte bewirkt, die zusätzlich zur Folge haben, dass selbst bei betriebsbedingt auftretenden äußeren mechanischen Einflüssen, wie beispielsweise Vibrationen oder ein Rütteln, der Kennzeichnungsträger fest an der Fahrzeugkomponente haften bleibt. Andererseits erlaubt die Befestigung allein mittels Federwirkung ein relativ einfaches Lösen des Kennzeichnungsträgers von der Fahrzeugkomponente. Der Grundkörper kann mit beliebiger Geometrie ausgestaltet sein, um so eine Individualisierung der Fahrzeugkomponente, beispielsweise durch Anbringen des Herstellerlogos oder sonstiger Informationen, zu ermöglichen.

Eine Weiterbildung der Erfindung sieht vor, dass die wenigstens eine Federzunge ausgehend von dem Grundkörper gerundet, beispielsweise bauchig oder bogenförmig oder aber auch wellenförmig, ausgebildet und an ihrem freien Ende mit einem Anlageabschnitt versehen ist, wobei sie sich unter Stauchung der Rundung oder Wellenform mit ihrem Anlageabschnitt an der Fahrzeugkomponente federnd abstützt. Über die Rundung oder Wellenform und deren Komprimierung kann je nach Bedarf eine hinreichend große Federkraft zur Vorspannung aufgebaut werden. Insbesondere kann im Zusammenhang mit einer wellenförmigen Gestaltung vorgesehen sein, dass die wenigstens eine Federzunge eine Doppel-S-Form aufweist. Durch die gerundete oder wellenförmige Gestaltung ergeben sich unter geringem fertigungstechnischem Aufwand besonders gute Federungseigenschaften. Um eine definierte Anlagefläche mit Haltefunktion bereitzustellen, sieht eine Weiterbildung der Erfindung vor, dass der Anlageabschnitt der wenigstens einen Federzunge geradlinig oder zur Fahrzeugkomponente hin konkav gekrümmt ausgebildet ist.

Um die Befestigung zwischen Kennzeichnungsträger und Fahrzeugkomponente weiter zu verbessern, sieht eine Weiterbildung der Erfindung vor, dass der Kennzeichnungsträger mit wenigstens einer Haltelasche versehen ist, die die Fahrzeugkomponente haltend umgreift. Vorzugsweise ist dabei vorgesehen, dass die Haltelasche mit einer Kontaktprägung versehen ist. Die Kontaktprägung kann einen sphärischen Flächenabschnitt ausbilden, über den sie mit einer korrespondierenden Fläche der Fahrzeugkomponente in Kontakt gelangt. Dadurch wird eine definierte Anlage zum Erreichen einer gewünschten Vorspannung gegen ein Lösen oder Rütteln des Kennzeichnungsträgers erzielt.

Gemäß einer Ausführungsvariante der Erfindung ist es möglich, dass die Federlasche von derselben Seitenfläche des Grundkörpers ausgeht. Ferner kann sich die wenigstens eine Federlasche im Wesentlichen parallel zur Erstreckungsrichtung der Rundung oder zur Wellenrichtung der wenigstens einen Federzunge über die Länge der wenigstens einen Federzunge hinaus erstrecken. Mit anderen Worten läuft bei dieser Ausführungsvariante die wenigstens eine Federlasche richtungsparallel zu der wenigstens einen Federzunge, erstreckt sich jedoch über diese hinaus.

Zum Aufbringen der Gegenkräfte über die Federlasche kann erfindungsgemäß vorgesehen sein, dass die Federlasche einen Haltevorsprung aufweist, mit dem sie an einer korrespondierenden Halteformation der Fahrzeugkomponente angreift. Die Halteformation kann dabei beispielsweise rund, eckig oder oval ausgeformt sein. Dabei kann diese bereits vorab beim Gießprozess oder durch anschließende spanende oder kaltumformende Bearbeitung hergestellt werden. Der Haltevorsprung kann beispielsweise eine Nase oder einen Materialabschnitt umfassen, der sich ausgehend von der Federlasche in einem vorbestimmten Winkel zahnartig erstreckt.

In einer speziellen Ausführungsvariante der Erfindung ist vorgesehen, dass die Federlasche im Wesentlichen mittig an dem Grundkörper angeformt ist, wobei sich beidseits der Federlasche im Abstand zu dieser jeweils eine Federzunge erstreckt. Ferner ist es hinsichtlich einer stabilen Ausgestaltung von wenigstens einer Federlasche und wenigstens einer Federzunge möglich, dass die Federlasche wesentlich breiter als, vorzugsweise mindestens doppelt so breit wie, die wenigstens eine Federzunge ausgebildet ist.

Darüber hinaus kann bei einer Weiterbildung der Erfindung vorgesehen sein, dass sich die wenigstens eine Federzunge sowie die Federlasche im Wesentlichen auf einer der Kennzeichnung abgewandten Seite erstrecken.

Die Erfindung betrifft ferner eine Fahrzeugkomponente, insbesondere Bremszange einer Schwimmsattelbremse, zur Aufnahme eines Kennzeichnungsträgers der vorstehend beschriebenen Art, wobei die Fahrzeugkomponente einen Befestigungsansatz aufweist, auf den der Grundkörper des Kennzeichnungsträgers aufsteckbar ist, wobei die wenigstens eine Federzunge an einer Stirnseite des Befestigungsansatzes angreift und wobei die Federlasche den Befestigungsansatz umgreift. Der Befestigungsansatz kann beispielsweise entsprechend der Abmessungen des Grundkörpers des Kennzeichnungsträgers ausgebildet oder speziell auf die Wechselwirkung von Federlasche und Federzunge abgestimmt sein. Vorzugsweise wird der Befestigungsansatz unmittelbar an der Fahrzeugkomponente angeformt. Alternativ kann der Befestigungsansatz auch aus einem separaten Bauteil, z.B. einem Blechformteil, gebildet sein, welches nachträglich an der Fahrzeugkomponente z.B. kraftschlüssig oder formschlüssig befestigt ist. So kann der Befestigungsansatz beispielsweise einen Teil der Fahrzeugkomponente umfassen oder umgreifen.

In diesem Zusammenhang kann ferner vorgesehen sein, dass der Befestigungsansatz eine zentrale Ausnehmung aufweist, in die der Befestigungsvorsprung haltend eingreift.

Die Erfindung wird im Folgenden beispielhaft anhand der beiliegenden Figuren erläutert. Es stellen dar:
- Fig. 1: eine Vorderansicht des erfindungsgemäßen Kennzeichnungsträgers,
- Fig. 2: eine räumliche Rückansicht des erfindungsgemäßen Kennzeichnungsträgers,
- Fig. 3: eine räumliche Vorderansicht bei der Montage des erfindungsgemäßen Kennzeichnungsträgers an einer Bremszange,
- Fig. 4: eine räumliche Rückansicht von Figur 3,
- Fig. 5: eine räumliche Rückansicht während der Montage kurz vor Erreichen der Endposition,
- Fig. 6: eine Seitenansicht eines Ausschnitts der erfindungsgemäßen Bremszange mit fertig montiertem Kennzeichnungsträger,
- Fig. 7: eine Rückansicht des Zustands gemäß Figur 6,
- Fig. 8: eine Rückansicht eines Kennzeichnungsträgers gemäß einer zweiten Ausführungsform der Erfindung,
- Fig. 9: eine perspektivische Ansicht des Kennzeichnungsträgers gemäß Figur 8,
- Fig. 10: eine Ansicht entsprechend Figur 7 mit dem Kennzeichnungsträger gemäß der zweiten Ausführungsform,
- Fig. 11: eine Schnittansicht entsprechend Schnittlinie XI-XI aus Figur 10 und
- Fig. 12: eine Ansicht entsprechend Figur 6 des Kennzeichnungsträgers gemäß der zweiten Ausführungsform.

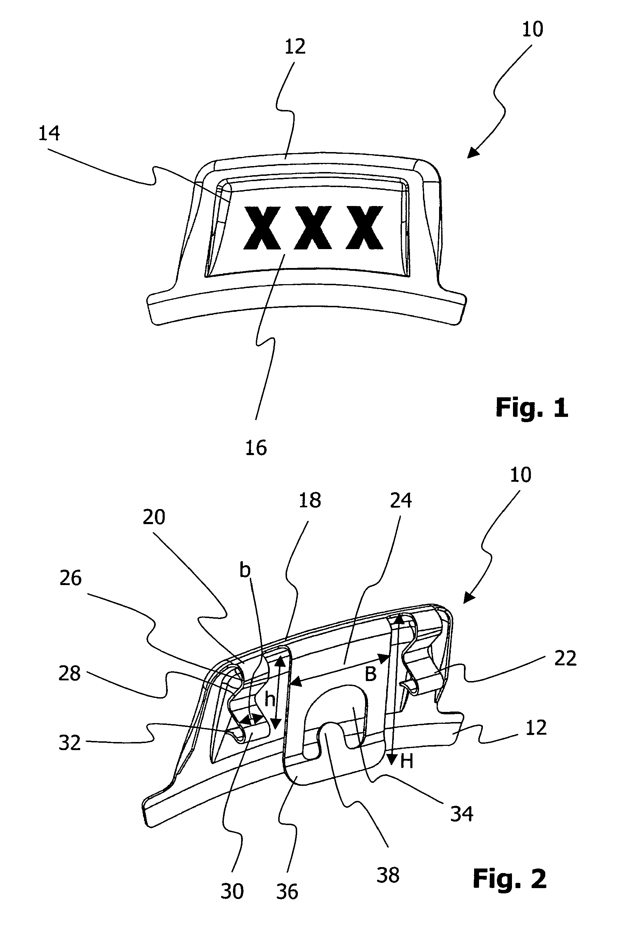

In Fig. 1 und 2 ist ein erfindungsgemäßer Kennzeichnungsträger in Vorderansicht und den Rückansicht gezeigt und allgemein mit 10 bezeichnet. Dieser umfasst einen flächigen Grundkörper 12, in dem eine Vertiefung 14 eingearbeitet ist. In dieser Vertiefung ist eine Kennzeichnung 16 angebracht, in der Figur durch die Buchstaben "XXX" angegeben. Diese Kennzeichnung kann ein Herstellername, ein Herstellerlogo oder eine sonstige Information sein. Die Kennzeichnung kann dabei mittels der Druck-, Laser-, Lackier-, Präge- oder Sandstrahltechnik direkt oder mittels z.B. eines Aufklebers oder Emblems an dem Kennzeichenträger indirekt angebracht werden.

In der Rückansicht gemäß Figur 2 erkennt man, dass an dem Grundkörper 12 des Kennzeichnungsträgers 10 an dessen Oberkante 18 zwei Federlaschen 20, 22 sowie eine längliche Federzunge 24 angeformt sind. Die beiden Federlaschen 20, 22 sind in ihrer Form im Wesentlichen identisch, so dass nur die Federlasche 20 beschrieben wird. Diese erstreckt sich ausgehend von der Oberkante 18 mit einer Rundung 26 mit im wesentlichen konstanter Krümmung gerundet wellenförmig zu einem Wellental 28 und ausgehend von diesem wieder zu einem Wellenvorsprung 30. Ausgehend von diesem Wellenvorsprung 30 erstreckt sich die Federlasche 20 zu ihrem freien Ende 32, das in konkaver Form geschwungen ist. Die Federlasche 20, 22 besitzt eine Breite b und eine Höhe h in entspanntem Zustand.

In lichtem Abstand zu der Federlasche 20 ist etwa zentral am Kennzeichnungsträger 10 die Federzunge 24 angeordnet. Diese erstreckt sich im wesentlichen geradlinig richtungsgleich zu der Federlasche 20 nach unten, jedoch mit größerer Länge H und wesentlich größerer Breite B, im gezeigten Ausführungsbeispiel im wesentlichen doppelter Höhe (H=2*h) und vierfacher Breite (B=4*b) im Vergleich zu der Höhe bzw. Breite der Federlasche 20. Die Federzunge 24 umfasst eine zentrale Öffnung 34 und ein leicht vom Grundkörper weg abgewinkeltes freies Ende 36. In die zentrale Öffnung 34 ragt ein nach innen zum Grundkörper 12 hin abgewinkelter Vorsprung 38, der mit gerundeter Kontur ausgebildet ist

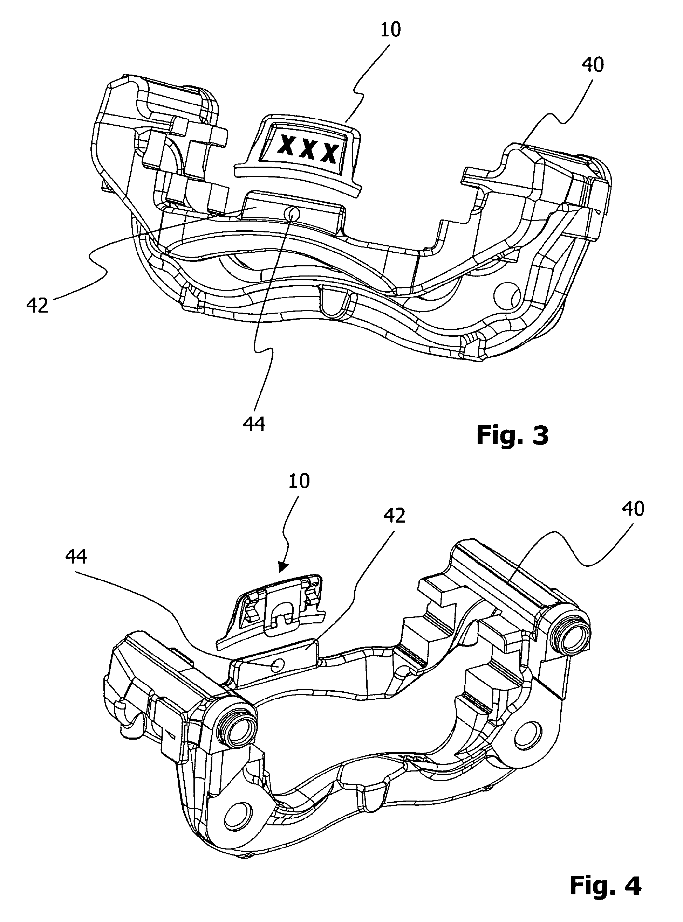

Figuren 3 und 4 zeigen eine Bremszange 40 einer Schwimmsattel-Scheibenbremse, die eine an sich herkömmliche Gestaltung aufweist. Allerdings ist diese Bremszange 40 mit einem Befestigungsansatz 42 versehen, der integral an der Bremszange 40 angeordnet ist. Dieser Befestigungsansatz 42 weist eine zentrale Öffnung 44 auf. Der Befestigungsansatz 42 dient dazu, den Kennzeichnungsträger 10 an der Bremszange 40 zu befestigen. Die Figuren 3 und 4 zeigen dabei einen Vormontagezustand des Kennzeichnungsträgers 10.

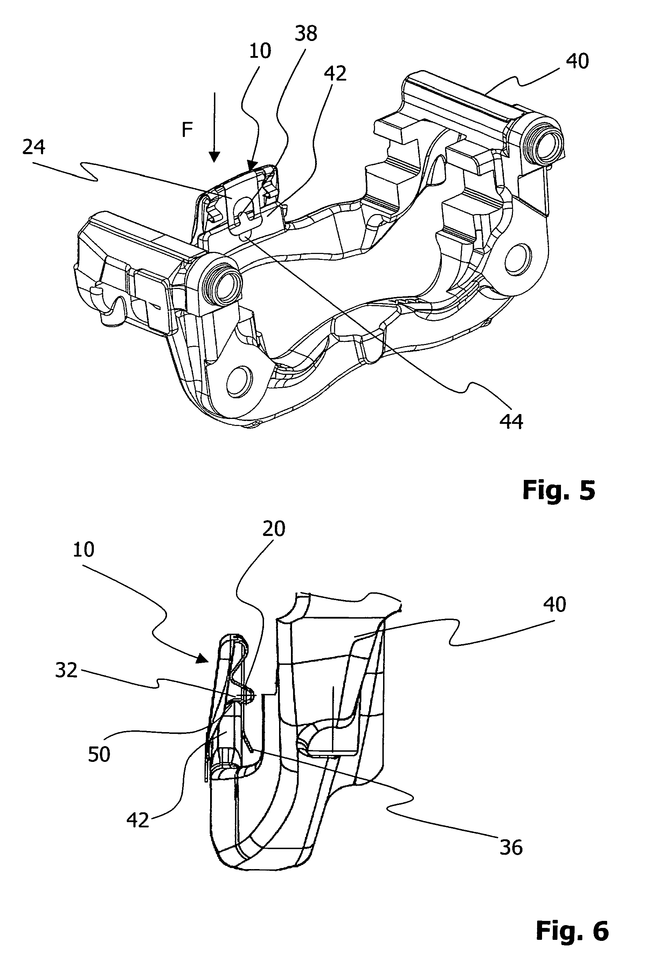

In Figur 5 ist der Kennzeichnungsträger 10 bereits auf den Befestigungsansatz 42 aufgesteckt, jedoch noch nicht vollständig mit ihm verrastet. Insbesondere ragt dabei der Vorsprung 38 noch nicht in die zentrale Öffnung 44 am Befestigungsansatz 42.

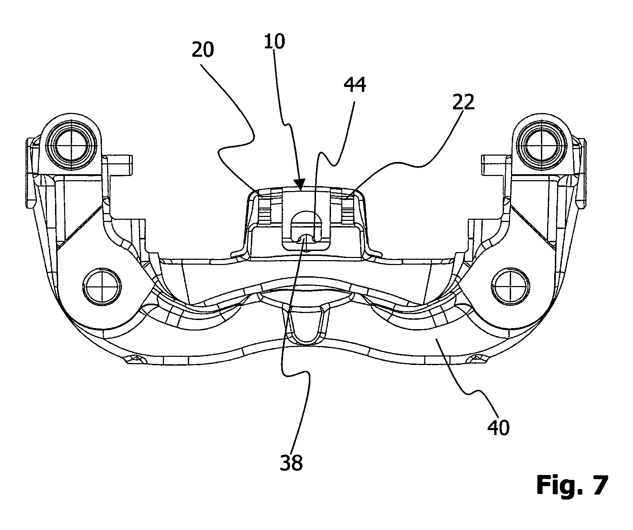

Figuren 6 und 7 zeigen schließlich den Kennzeichnungsträger 10 in dem montierten Zustand, in dem er an der Bremszange 40 angebracht ist. Dabei erkennt man, wie die Federlasche 20 in ihrer geschwungenen Form ausgebildet ist und mit ihrem konkav geformten freien Ende 32 auf dem oberen Rand 50 des Befestigungsansatzes 42 aufliegt. Der Kennzeichnungsträger 10 wird im Rahmen der Montage mit einer bestimmten Montagekraft F (siehe Figur 5) nach unten gedrückt, wobei die beiden Federlaschen 20, 22 vertikal zusammengedrückt und federnd deformiert werden, bis schließlich der Vorsprung 38 der Federzunge 24 in die zentrale Öffnung 44 des Befestigungsansatzes 42 einschnappen kann. Dabei wirkt der Vorsprung 38 mit seiner abgerundeten Form mit der runden zentralen Öffnung 44 des Befestigungsansatzes 42 positionierend zusammen, so dass der Kennzeichnungsträger 10 eine vorbestimmte Solllage relativ zur Bremszange 40 einnimmt. Sodann kann im Rahmen der Montage der Kennzeichnungsträger 10 freigegeben werden und es stellt sich der Zustand ein, wie in Figuren 6 und 7 gezeigt.

Im montierten Zustand wird durch die Komprimierung der doppel-S-förmigen Federlaschen 20, 22 der Kennzeichnungsträger 10 tendenziell in Figuren 6 und 7 in vertikaler Richtung nach oben vorgespannt (Vorspannrichtung), jedoch über den Vorsprung 38 in entgegengesetzter Richtung nach unten (Halterichtung) gehalten, wobei der Vorsprung 38 in die Öffnung 44 eingreift. Es stellt sich aufgrund der Federvorspannung der Federlaschen 20, 22 ein Spannungszustand ein, der den Kennzeichnungsträger 10 fest an dem Befestigungsansatz 42 hält, selbst wenn im Betrieb Vibrationen an der Bremszange 40 auftreten. Andererseits lässt sich der Kennzeichnungsträger 10 leicht von der Bremszange 40 entfernen, indem der Kennzeichnungsträger 10 etwas nach unten gedrückt wird, wobei die Vorspannung in den Federlaschen 20, 22 erhöht wird, und in der Folge die Federzunge 24 derart von dem Befestigungsansatz 42 weg geschwenkt werden kann, dass der Vorsprung 38 außer Eingriff mit der zentralen Öffnung 44 gelangt und so der Kennzeichnungsträger 10 widerstandsfrei nach oben abgezogen werden kann.

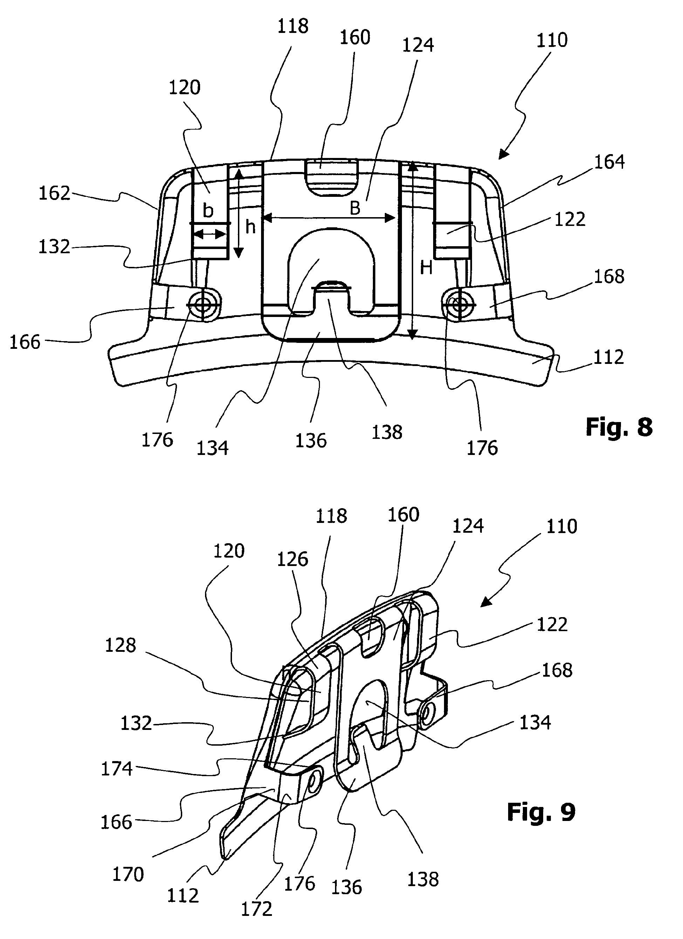

Eine zweite Ausführungsform der Erfindung ist in den Figuren 8 bis 12 dargestellt. Zur Vereinfachung der Beschreibung und zur Vermeidung von Wiederholungen werden für gleichartige oder gleichwirkende Komponenten dieselben Bezugszeichen verwendet wie bei der mit Bezug auf die Figuren 1 bis 7 beschriebenen Ausführungsform, jedoch mit der Ziffer "1" vorangestellt.

Der gegenüber der ersten Ausführungsform abgewandelte Kennzeichnungsträger 110 weist zum einen andersartig ausgebildete Federlaschen 120, 122 auf. Diese sind nicht wellenförmig ausgebildet, sondern erstrecken sich ausgehend von der Oberkante 118 bauchig über die Rundung 126 in einen geradlinigen Abschnitt 128, und von dort in einen schräg nach unten verlaufenden Anlageabschnitt 132, der das freie Ende bildet. Zudem weist die Federzunge 124 im Bereich nahe ihrer Oberkante 118 eine Öffnung 160 auf.

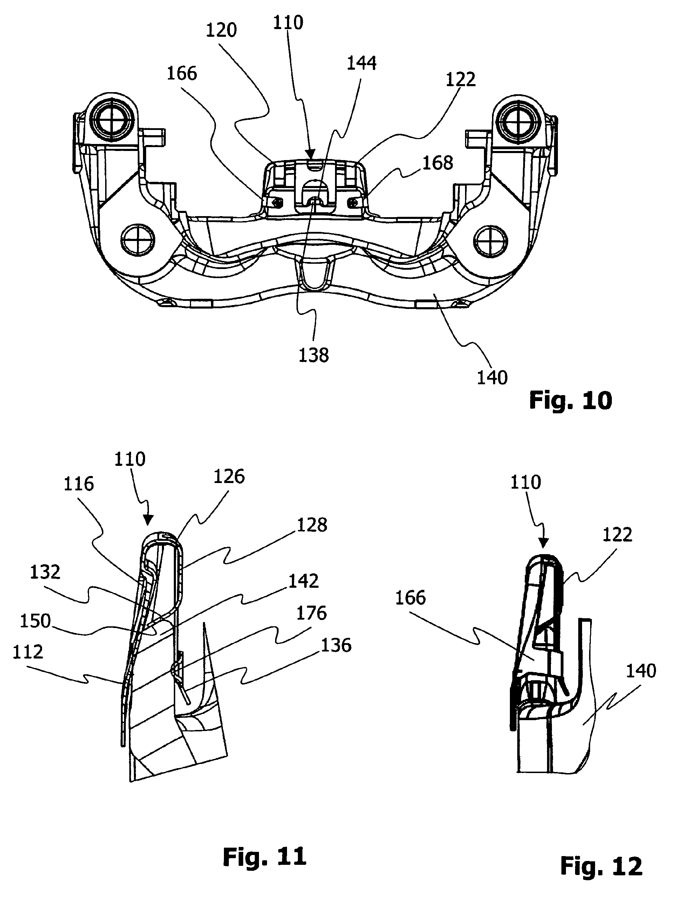

Ferner erkennt man, dass sich ausgehend von Seitenkanten 162, 164 des Grundkörpers 112 jeweils eine Haltelasche 166, 168 erstreckt. Jede Haltelasche 166, 168 weist einen geradlinig verlaufenden ersten Abschnitt 170, eine Krümmung 172 und einen im Wesentlichen 90° zum ersten Abschnitt 170 verlaufenden zweiten Abschnitt 174 auf. In diesem zweiten Abschnitt 174 ist eine kreisförmige Einprägung 176 vorgesehen, die, wie in Figur 11 erkennbar, einen dem Befestigungsansatz 142 zugewandten sphärischen Flächenabschnitt bildet und im montierten Zustand in definierte Anlage mit der Rückseite des Befestigungsabschnitt 142 gelangt. Durch diese definierte Anlage ist eine hinreichende Abstützung jeder Haltelasche 166, 168 zur Federvorspannung gegeben, so dass ein Losrütteln oder Klappern verhindert werden kann. Diese zweite Ausführungsform bietet durch die zusätzlichen Haltelaschen 166,168 eine sichere Befestigung des Kennzeichnungsträgers 110 an dem Befestigungsansatz 142.

In Figur 11 erkennt man ferner, dass der geradlinige Abschnitt 132 in definierter flächiger Anlage mit dem diesen zugewandten schrägen Flächenabschnitt 150 liegt.

In beiden Ausführungsformen erkennt man, dass der Kennzeichnungsträger in seiner Höhenerstreckung wesentlich länger ausgebildet ist, als der zur Befestigung dienende Befestigungsansatz 42 bzw. 142. Das Maß, mit dem sich der Kennzeichnungsträger 10 bzw. 110 über den Befestigungsansatz 42 bzw. 142 hinaus erstreckt, dient zum Aufbau einer Federvorspannung über die Federlaschen 20, 22 bzw. 120, 122.

Insgesamt ergibt sich gemäß der vorliegenden Erfindung ein einfach montierbarer, sicher an einer Fahrzeugkomponente im Betrieb haltender und auch einfach demontierbarer Kennzeichnungsträger.

## Patentansprüche

1. Kennzeichnungsträger (10; 110) zum Anbringen an einer Fahrzeugkomponente (40; 140), insbesondere an einer Bremszange einer Schwimmsattelbremse für ein Kraftfahrzeug, wobei der Kennzeichnungsträger (10; 110) umfasst:
- einen flächigen Grundkörper (12; 112), an dem eine Kennzeichnung (16) angebracht oder anbringbar ist, und
- Befestigungsmittel (20, 22, 24; 120 ,122, 124, 166, 168) zum lösbaren Befestigen des Kennzeichnungsträgers (10; 110) an der Fahrzeugkomponente (40; 140),
wobei die Befestigungsmittel integral mit dem Kennzeichnungsträger (10; 110) ausgebildet und unter Vermeidung von Hilfsmitteln an der Fahrzeugkomponente (40; 140) bleibend festklemmbar sind,
**dadurch gekennzeichnet, dass** der Kennzeichnungsträger (10; 110) wenigstens eine von seinem Grundkörper (12; 112) ausgehende Federzunge (20, 22; 120, 122) aufweist, welche dazu ausgebildet ist, federnd an der Fahrzeugkomponente (40; 140) anzugreifen und den Grundkörper (12; 112) in einer Vorspannrichtung gegen die Fahrzeugkomponente (40; 140) vorzuspannen, und dass der Kennzeichnungsträger (10; 110) wenigstens eine Federlasche (24; 124) aufweist, die an der Fahrzeugkomponente (40; 140) derart angreift, dass sie den Kennzeichnungsträger (10; 110) in einer zur Vorspannrichtung entgegengesetzten Halterichtung hält.

2. Kennzeichnungsträger (10; 110) nach Anspruch 1,
**dadurch gekennzeichnet, dass** die wenigstens eine Federzunge (20, 22; 120, 122) ausgehend von dem Grundkörper (12; 112) gerundet ausgebildet und an ihrem freien Ende mit einem Anlageabschnitt (32; 132) versehen ist, wobei sie sich unter Stauchung der Rundung mit ihrem Anlageabschnitt (32; 132) an der Fahrzeugkomponente (40; 140) federnd abstützt.

3. Kennzeichnungsträger (10) nach Anspruch 2,
**dadurch gekennzeichnet, dass** die wenigstens eine Federzunge (20, 22) wellenförmig ausgebildet ist.

4. Kennzeichnungsträger (110) nach Anspruch 2,
**dadurch gekennzeichnet, dass** die wenigstens eine Federzunge (120, 122) bauchig gerundet ausgebildet ist.

5. Kennzeichnungsträger (110) nach einem der vorangehenden Ansprüchen,
**gekennzeichnet durch** wenigstens eine Haltelasche (166, 168), die die Fahrzeugkomponente (140) haltend umgreift, wobei die Haltelasche vorzugsweise mit einer Kontaktprägung (176) versehen ist.

6. Kennzeichnunqsträqer (10; 110) nach einem der Ansprüchen 2 bis 5,
**dadurch gekennzeichnet, dass** der Anlaqeabschnitt (32; 132) geradlinig oder zur Fahrzeugkomponente (40; 140) hin konkav gekrümmt ausgebildet ist.

7. Kennzeichnungsträger (10) nach einem der vorangehenden Ansprüche,
**dadurch gekennzeichnet, dass** die wenigstens eine Federzunge (20, 22) eine Doppel-S-Form aufweist.

8. Kennzeichnungsträger (10; 110) nach einem der vorangehenden Ansprüche,
**dadurch gekennzeichnet, dass** die Federlasche (24; 124) von derselben Seitenfläche des Grundkörpers (12; 112) ausgeht und sich im Wesentlichen parallel zur Wellenrichtung der wenigstens einen Federzunge (20, 22; 120, 122) über die Länge der wenigstens einen Federzunge (20, 22; 120, 122) hinaus erstreckt.

9. Kennzeichnungsträger (10; 110) nach einem der vorangehenden Ansprüche,
**dadurch gekennzeichnet, dass** die Federlasche (24; 124) einen Haltevorsprung (38; 138) aufweist, mit dem sie an einer korrespondierenden Halteformation (44; 144) der Fahrzeugkomponente (40; 140) angreift.

10. Kennzeichnungsträger (10; 110) nach einem der vorangehenden Ansprüche,
**dadurch gekennzeichnet, dass** die Federlasche (24; 124) im Wesentlichen mittig an dem Grundkörper (12; 112) angeformt ist, wobei sich beidseits der Federlasche (24; 124) jeweils eine Federzunge (20, 22; 120, 122) erstreckt.

11. Kennzeichnungsträger (10; 110) nach einem der vorangehenden Ansprüche,
**dadurch gekennzeichnet, dass** die Federlasche (24; 124) wesentlich breiter als, vorzugsweise mindestens doppelt so breit wie, die wenigstens eine Federzunge (20, 22; 120, 122) ausgebildet ist.

12. Kennzeichnungsträger (10; 110) nach einem der vorangehenden Ansprüche,
**dadurch gekennzeichnet, dass** sich die wenigstens eine Federzunge (20, 22; 120; 122) sowie die Federlasche (24; 124) im Wesentlichen auf einer der Kennzeichnung (16; 116) abgewandten Seite erstrecken.

13. Fahrzeugkomponente (40; 140), insbesondere Bremszange einer Schwimmsattelbremse, zur Aufnahme eines Kennzeichnungsträgers (10; 110) nach einem der vorangehenden Ansprüche,
**dadurch gekennzeichnet, dass** die Fahrzeugkomponente (40; 140) einen Befestigungsansatz (42; 142) aufweist, auf den der Grundkörper (12; 112) des Kennzeichnungsträgers (10; 110) aufsteckbar ist, wobei die wenigstens eine Federzunge (20, 22; 120, 122) an einer Stirnseite des Befestigungsansatzes (42; 142) angreift und wobei die Federlasche (24; 124) den Befestigungsansatz (42; 42) umgreift.

14. Fahrzeugkomponente (40; 140) nach Anspruch 13,
**dadurch gekennzeichnet, dass** der Befestigungsansatz (42; 142) eine als zentrale Ausnehmung (44; 144) ausgebildete Halteformation aufweist, in die der Befestigungsvorsprung (38; 138) haltend eingreift.

15. Fahrzeugkomponente (40; 140) nach Anspruch 14,
**dadurch gekennzeichnet, dass** die Haltformation (44; 144) rund, beispielsweise kreisrund oder oval, oder eckig ausgebildet ist.

## Claims

1. A marking carrier (10; 110) for installation on a vehicle component (40; 140), in particular on a brake caliper of a floating-caliper brake for a motor vehicle, wherein the marking carrier (10; 110) comprises:
a planar main body (12; 112), on which a marking (16) is applied or can be applied, and
fastening means (20, 22, 24; 120,122, 124, 166, 168) for detachably fastening the marking carrier (10; 110) on the vehicle component (40; 140), wherein the fastening means are integrally formed with the marking carrier (10; 110) and can be permanently clamped on the vehicle component (40; 140) without the use of auxiliary means,
**characterized in that** the marking carrier (10; 110) comprises at least one spring tab (20, 22; 120, 122) proceeding from the main body (12; 112) of said marking carrier, said spring tab being designed to resiliently engage on the vehicle component (40; 140) and preload the main body (12; 112) in a preload direction against the vehicle component (40; 140), and **in that** the marking carrier (10; 110) comprises at least one spring hanger (24; 124), which engages on the vehicle component (40; 140) such that said spring hanger holds the marking carrier (10; 110) in a holding direction opposed to the preload direction.

2. The marking carrier (10; 110) according to claim 1,
**characterized in that** the at least one spring tab (20, 22; 120,122) proceeding from the main body (12; 112) is rounded and is provided with a bearing section (32; 132) on the free end thereof, wherein said spring tab resiliently bears against the vehicle component (40; 140) via the bearing section (32; 132), whereby the rounding is compressed.

3. The marking carrier (10) according to claim 2,
**characterized in that** the at least one spring tab (20, 22) is wave-shaped.

4. The marking carrier (110) according to claim 2,
**characterized in that** the at least one spring tab (120, 122) is rounded in the shape of a bulge.

5. The marking carrier (110) according to any one of the preceding claims, **characterized by** at least one holding tab (166, 168), which wraps around the vehicle component (140) in a retaining manner, wherein the holding tab is preferably provided with a contact hobbing (176).

6. The marking carrier (10; 110) according to any one of the claims 2 through 5,
**characterized in that** the bearing section (32; 132) is straight or concavely curved toward the vehicle component (40; 140).

7. The marking carrier (10) according to any one of the preceding claims,
**characterized in that** the at least one spring tab (20, 22) has a double S shape.

8. The marking carrier (10; 110) according to any one of the preceding claims,
**characterized in that** the spring hanger (24; 124) proceeds from the same lateral surface of the main body (12; 112) and extends substantially parallel to the wave direction of the at least one spring tab (20, 22; 120, 122), across the length of the at least one spring tab (20, 22; 120, 122).

9. The marking carrier (10; 110) according to any one of the preceding claims,
**characterized in that** the spring hanger (24; 124) comprises a retaining projection (38; 138), by means of which said spring hanger engages on a corresponding retaining formation (44; 144) of the vehicle component (40; 140).

10. The marking carrier (10; 110) according to any one of the preceding claims,
**characterized in that** the spring hanger (24; 124) is integrally formed substantially in the center on the main body (12; 112), wherein a spring tab (20, 22; 120, 122) extends on each of both sides of the spring hanger (24; 124).

11. The marking carrier (10; 110) according to any one of the preceding claims,
**characterized in that** the spring hanger (24; 124) is substantially wider, preferably at least twice as wide, as the at least one spring tab (20, 22; 120,122).

12. The marking carrier (10; 110) according to any one of the preceding claims,
**characterized in that** the at least one spring tab (20, 22; 120; 122) and the spring hanger (24; 124) extend substantially on a side facing away from the marking (16; 116).

13. The vehicle component (40; 140), in particular a brake caliper of a floating-caliper brake, for accommodating a marking carrier (10; 110), according to any one of the preceding claims,
**characterized in that** the vehicle component (40; 140) comprises a fastening attachment (42; 142), onto which the main body (12; 112) of the marking carrier (10; 110) can be inserted, wherein the at least one spring tab (20, 22; 120,122) engages on an end face of the fastening attachment (42; 142), and wherein the spring hanger (24; 124) wraps around the fastening attachment (42; 42).

14. The vehicle component (40; 140) according to claim 13,
**characterized in that** the fastening attachment (42; 142) comprises a retaining formation embodied as a central recess (44; 144), into which the fastening projection (38; 138) engages in a retaining manner.

15. The vehicle component (40; 140) according to claim 14,
**characterized in that** the retaining formation (44; 144) is round, for example circular or oval, or polygonal.

## Revendications

1. Support d'identification (10 ; 110) destiné à être appliqué sur un composant de véhicule (40 ; 140), en particulier sur un étrier de frein d'un frein à étrier flottant pour un véhicule automobile, lequel support d'identification (10 ; 110) comprenant :
- un corps de base plat (12 ; 112) sur lequel une identification (16) est appliquée ou applicable, et
- des moyens de fixation (20, 22, 24 ; 120, 122, 124, 166, 168) pour la fixation détachable du support d'identification (10 ; 110) sur le composant de véhicule (40 ; 140),
les moyens de fixation étant réalisés d'une seule pièce avec le support d'identification (10 ; 110) et pouvant être fixés de manière permanente au composant de véhicule (40 ; 140) en évitant des moyens auxiliaires,
**caractérisé en ce que** le support d'identification (10 ; 110) comprend au moins une languette élastique (20, 22 ; 120, 122) partant de son corps de base (12 ; 112), laquelle est configurée pour agir élastiquement sur le composant de véhicule (40 ; 140) et précontraindre le corps de base (12 ; 112) contre le composant de véhicule (40 ; 140) dans une direction de précontrainte, et que le support d'identification (10 ; 110) comprend au moins une patte élastique (24 ; 124) qui agit sur le composant de véhicule (40 ; 140) de façon à maintenir le support d'identification (10 ; 110) dans une direction de maintien opposée à la direction de précontrainte.

2. Support d'identification (10 ; 110) selon la revendication 1,
**caractérisé en ce que** ladite au moins une languette élastique (20, 22 ; 120, 122) partant du corps de base (12 ; 112) est de forme arrondie et pourvue d'une partie d'appui (32 ; 132) à son extrémité libre, de sorte qu'elle s'appuie élastiquement sur le composant de véhicule (40 ; 140) avec sa partie d'appui (32 ; 132) par compression de l'arrondi.

3. Support d'identification (10) selon la revendication 2,
**caractérisé en ce que** ladite au moins une languette élastique (20, 22) est de forme ondulée.

4. Support d'identification (110) selon la revendication 2,
**caractérisé en ce que** ladite au moins une languette élastique (120, 122) est de forme arrondie bombée.

5. Support d'identification (110) selon l'une des revendications précédentes,
**caractérisé par** au moins une patte de maintien (166, 168) qui enserre le composant de véhicule (140) de manière à assurer un maintien, la patte de maintien étant de préférence pourvue d'une empreinte de contact (176).

6. Support d'identification (10 ; 110) selon l'une des revendications 2 à 5, **caractérisé en ce que** la partie d'appui (32 ; 132) est de forme rectiligne ou présente une courbure concave vers le composant de véhicule (40 ; 140).

7. Support d'identification (10) selon l'une des revendications précédentes, **caractérisé en ce que** ladite au moins une languette élastique (20, 22) présente une forme en double S.

8. Support d'identification (10 ; 110) selon l'une des revendications précédentes,
**caractérisé en ce que** la patte élastique (24 ; 124) part de la même surface latérale du corps de base (12 ; 112) et s'étend sensiblement parallèlement à la direction d'ondulation de ladite au moins une languette élastique (20, 22 ; 120, 122) au-delà de la longueur de ladite au moins une languette élastique (20, 22 ; 120, 122).

9. Support d'identification (10 ; 110) selon l'une des revendications précédentes,
**caractérisé en ce que** la patte élastique (24 ; 124) comprend une saillie de maintien (38 ; 138) avec laquelle elle agit sur une formation de maintien correspondante (44 ; 144) du composant de véhicule (40 ; 140).

10. Support d'identification (10 ; 110) selon l'une des revendications précédentes,
**caractérisé en ce que** la patte élastique (24 ; 124) est formée sensiblement centralement sur le corps de base (12 ; 112), une languette élastique (20, 22 ; 120, 122) s'étendant de chaque côté de la patte élastique (24 ; 124).

11. Support d'identification (10 ; 110) selon l'une des revendications précédentes,
**caractérisé en ce que** la patte élastique (24 ; 124) est bien plus large, de préférence au moins deux fois plus large, que ladite au moins une languette élastique (20, 22 ; 120, 122).

12. Support d'identification (10 ; 110) selon l'une des revendications précédentes,
**caractérisé en ce que** ladite au moins une languette élastique (20, 22 ; 120 ; 122) ainsi que la patte élastique (24 ; 124) s'étendent sensiblement sur un côté opposé à l'identification (16 ; 116).

13. Composant de véhicule (40 ; 140), en particulier étrier de frein d'un frein à étrier flottant, destiné à recevoir un support d'identification (10 ; 110) selon l'une des revendications précédentes,
**caractérisé en ce que** le composant de véhicule (40 ; 140) présente une embase de fixation (42 ; 142) sur laquelle le corps de base (12 ; 112) du support d'identification (10 ; 110) peut être enfiché, ladite au moins une languette élastique (20, 22 ; 120, 122) agissant sur une face frontale de l'embase de fixation (42 ; 142) et la patte élastique (24 ; 124) enserrant l'embase de fixation (42 ; 42).

14. Composant de véhicule (40 ; 140) selon la revendication 13,
**caractérisé en ce que** l'embase de fixation (42 ; 142) présente une formation de maintien réalisée sous la forme d'un évidement central (44 ; 144) dans lequel la saillie de fixation (38 ; 138) s'engage de manière à assurer le maintien.

15. Composant de véhicule (40 ; 140) selon la revendication 14,
**caractérisé en ce que** la formation de maintien (44 ; 144) est de forme ronde, par exemple circulaire ou ovale, ou polygonale.
